# EUROPEAN PATENT APPLICATION

(11) **EP 2 978 180 A1**
(43) Date of publication of application: **27.01.2016**
(21) Application number: 14306186.9
(22) Date of filing: 22.07.2014
(51) Int. Cl.: H04L 12/851, H04L 12/875, H04L 12/863, H04L 12/911, H04L 12/927

(54) **Signaling for transmission of coherent data flow within packet-switched network**

(71) Applicant: ALCATEL LUCENT, 92100 Boulogne-Billancourt (FR)
(72) Inventor: Leclerc, Brice, 91620 Nozay (FR); Marce, Olivier, 91620 Nozay (FR)
(74) Representative: Novagraaf Technologies

(57) **Abstract**

This invention relates to a node of packet-switched network having input interfaces (11, 12) and at least one output interfaces (O1), and a forwarding layer (FL) adapted to detect that a received datagram belongs to a coherent flow and to forward it to the appropriate output interface for emission during a reserved time interval, and further adapted to detect a reservation conflict concerning the emission of said datagram on said output interface and, when a reservation conflict is detected, to send a signaling message containing time information for modifying reception dates of subsequent datagrams of said coherent flow.

## Description

### FIELD OF THE INVENTION

The invention relates to the technical field of packet-switched communication networks and more precisely to the equipments or nodes within such networks.

In particular, it concerns the handling of coherent flow of datagrams transmitted by the nodes of a packet-switched network.

### BACKGROUND OF THE INVENTION

Packed-switched communication network are used for applications which require higher and higher quality of service (QoS) and quality of the user experience. These applications comprise video streaming or video-on-demand (VoD), video-conferencing, gaming, etc.

From a technical perspective, these applications require that the data are transmitted from the source to the recipient with the smallest transmission time (or "latency") and with good QoS characteristics (jitter, packet loss...), whereas the quantity of data to be transmitted increases year after year both because of the increasing need for quality (high definition videos, etc.) and because of the increasing number of people connected to communication networks.

Accordingly, many efforts have been undertaken in the recent years for increasing the bandwidth of the communication network. In 15 years, it is said that the overall bandwidth has been increased by around 1000 on access, wireless and core networks.

Nonetheless, the end-to-end latency did not follow the same improvement.

However, some applications are very sensible to latency. This is notably the case for applications implying interactivity like gaming, remote controlling, high-frequency computing etc. Such applications are different in nature than video transmitting or file transmission, etc. wherein the bandwidth is the major factor but which can experiment some end-to-end delay without QoS and user experience impacts.

For interactive applications, on the contrary, the end-to-end transmission time is the crucial factor, with a direct and important impact on QoS and user experience.

Therefore, the applications requiring interactivity or, more generally, requiring low latency, face difficulties to be deployed in good conditions. Some ad-hoc solutions (e.g. adapted for a given type of application) are sometimes elaborated but they cannot be generalized to other applications and are not sufficient in terms of latency reduction.

For example, when it comes to wireless technology, it appears that collaborative MIMO (CoMP, for "collaborative Multipoint") requires latency less than 1 ms. However, with regular IP-based networking mechanisms, going below a few milliseconds is challenging. Ad-hoc solutions where the collaborating base stations form a point-to-point mesh connected by fiber are not suitable for a large-scale deployment: this would require having fiber installed between all pair of nodes. Moreover, this would prevent any evolution of the network topology.

### SUMMARY OF THE INVENTION

The object of the present invention is to alleviate at least partly the above mentioned drawbacks.

This object is achieved with a method for forwarding datagrams in a node for a packet-switched network, comprising steps of:
- Receiving a datagram to be transmitted;
- Detecting that said datagram belongs to a coherent flow and forwarding said datagram to the appropriate output interface for emission during a reserved time interval;
- Detecting a reservation conflict concerning the emission of said datagram on said output interface and, when a reservation conflict is detected, sending a signaling message containing time information for modifying the reception dates of subsequent datagrams of said coherent flow.

Preferred embodiments comprise one or more of the following features, which can be taken separately or together, either in partial combination or in full combination.
- The method further comprises associating a temporal law to said coherent flow, so that said time interval is reserved in advance according to said temporal law.
- The method further comprises detecting a reservation conflict by determining that the reception date of said datagram does not comply with said temporal law, and wherein said time information is computed from said temporal law and said reception date.
- The method further comprises detecting a reservation conflict when the reception date of said datagram corresponds to an unavailable time interval for said output interface, and wherein said time information is based on the time on which said output interface is available.
- said datagram is received from an emitting node and wherein said signaling message is sent back to said emitting node.
- said datagram is received from an application (A) deployed at an application layer of said node, and wherein said signaling message is sent to said application.
- said application adapts its transmission configuration according to said time information.
- said application tunes a video configuration of a web-camera according to said time information.

Another aspect of the invention concerns a computer program product comprising computer-executable instructions for performing the method as previously described, when run onto a data processing unit.

Another aspect of the invention concerns a node of packet-switched network having input interfaces and at least one output interfaces, and a forwarding layer adapted to detect that a received datagram belongs to a coherent flow and to forward it to the appropriate output interface for emission during a reserved time interval, and further adapted to detect a reservation conflict concerning the emission of said datagram on said output interface and, when a reservation conflict is detected, to send a signaling message containing time information for modifying reception dates of subsequent datagrams of said coherent flow.

Preferred embodiments comprise one or more of the following features, which can be taken separately or together, either in partial combination or in full combination.
- said datagram is received from an emitting node and wherein said signaling message is sent back to said emitting node.
- a temporal law is associated to said coherent flow so that said time interval is reserved in advance according to said temporal law.
- The node is adapted to detect a reservation conflict by determining that the reception date of said datagram does not comply with said temporal law, and wherein said time information is computed from said temporal law and said reception date.
- The node is adapted to detect a reservation conflict when the reception date of said datagram corresponds to an unavailable time interval for said output interface, and wherein said time information is based on the time on which said output interface is available.
- The node further comprises an application layer comprising at least an application (A) and wherein said datagram is received from said application (A) and wherein said forwarding layer is adapted to send said signaling message to said application (A).

Further features and advantages of the invention will appear from the following description of embodiments of the invention, given as nonlimiting examples, with reference to the accompanying drawings listed hereunder.

### BRIEF DESCRIPTION OF THE DRAWINGS

Fig. 1 shows a very simplified example of a packet-based communication network.
Fig. 2 shows for a node the contention of a node as a function of its load, in various situations.
FIG. 3 shows a very simplified and schematic view of a network node according to an embodiment of the invention.
Fig. 4 shows a basic example illustrative a particular situation, according to an embodiment of the invention.

### DETAILED DESCRIPTION OF THE INVENTION

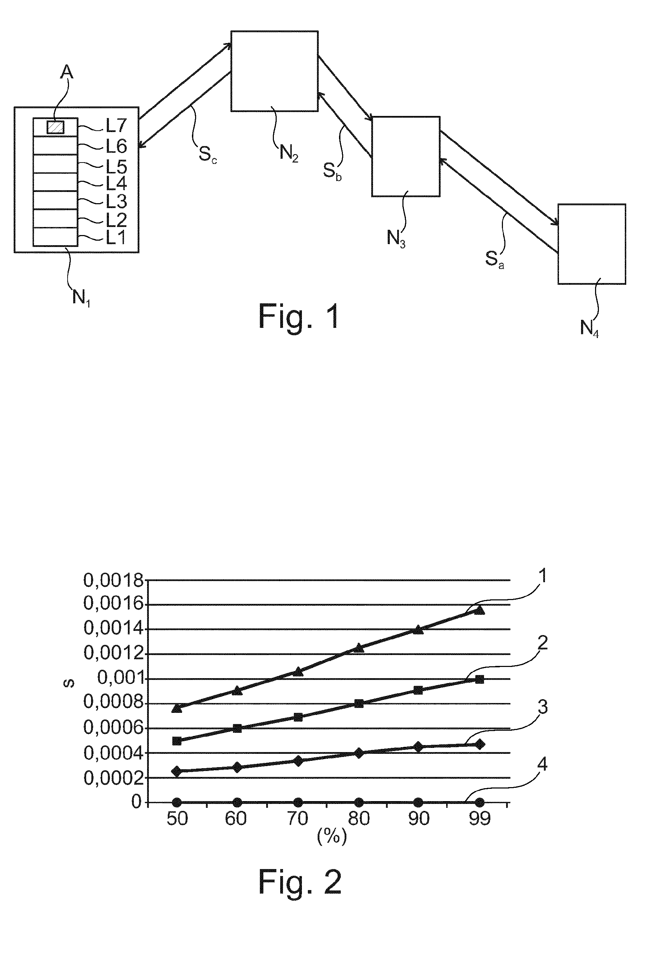

A packet-based communication network is depicted in FIG. 1. Its topology is very simplified for the purpose of clarity of the explanations.

This packet-based communication comprise nodes N1, N2, N3, N4, i.e. network equipments through which are transmitted datagrams between an emitter or source and a receiver or recipient. The emitter N1 and the receiver N4 can be considered as nodes also.

The expression "datagram" means here any atomic data transmission unit, or Protocol Data Unit (PDU), according to any layer, except the physical layer (layer 1). It comprises for instance IP packets (layer 3), frames (layer 2), TCP segments or UDP datagrams (layer 4), etc.

On the node 1, it has been depicted the protocol stack PS associated with the OSI layers, L1, L2, L3...L7, wherein the layer L7 represents the application layer. Typically, an application A (on layer L7) represents the source of a dataflow which is transmitted by the protocol stack PS for transmission towards a recipient N4, through the communication network. The way the data flow, made of datagrams, is actually transmitted and routed through a path made of nodes is out of the scope of the invention, and, consequently, not further detailed.

The time for transmitting a datagram from the application A to the recipient N4 (and, more precisely, to an application running on the node N4) depends on many factors.

The physical links between the nodes as well as the transmission technology for actually transmitting data over these links are parts of these factors. These considerations concern the layer 1 of the OSI model.

However, the end-to-end transmission time, or latency, has also causes at upper layers of the OSI model. These causes relate to various processing undertaken by the nodes to handle the datagrams.

Among these causes, major ones are collisions of datagrams at one node and buffering. Indeed, as a node may receive data flows from several sources, it implements buffering mechanisms to forward incoming messages into queues in order to manage asynchronously incoming data flows.

Accordingly, many solutions have been designed to react on collisions so as to reduce the buffering and decrease the latency due to multiplexing of forwarded datagrams inside network nodes.

Among these solutions, we can cite:
* Differentiated Services "Expedited Forwarding", as described by RFC 3246 of the IETF (Internet Engineering Task Force)
DiffServ "Expedited Forwarding" (EF) intends to provide low delay, low jitter and low loss of services by ensuring that the EF aggregates are served at a certain configured rate.

However this mechanism does not prevent congestion and then does not prevent a given datagram from being delayed: an "Expedited Forwarding" datagram is buffered before being forwarded in case the node has already EF datagrams awaiting to be transmitted.

Moreover, the applicant considers that the low loss feature is too stringent: Some applications, like interactive applications, do not need the same tradeoff between reliability and latency. For such applications, datagrams can be dropped without jeopardizing the QoS and user experience.
* Another solution is called "Explicit Congestion Notification" and is defined by e.g. RFC 3168 of the IETF. This solution relies on the detection of a congestion situation based on drop decisions taken by a node, and it aims at avoiding that the transport and the application suffer too much losses.

However, such a solution is only a reaction to correct a congestion situation, and does not allow limiting the latency.
* Another solution is described by the 802.1 Qav (Audio-video bridging) and 802.1 Qat (Admission control) IEEE standards. It aims at reliably deliver data with a deterministic low latency and low jitter, by reserving some bandwidth.

However, bandwidth reservation ensures a deterministic average latency but not a minimal latency, as it does not prevent congestion on output ports at the time a datagram arrives.

Moreover, as for the RFC 3246 solution, the low loss feature is too stringent.
* Another solution is called "Pseudo wire emulation" and is described by RFC 3985 of the IETF. It consists in emulating the essential behavior of telecommunication services over a packet-switched network. It intends in providing the minimum necessary functionality to emulate the wire with the required degree of faithfulness for the given service definition.

However, timed delivery keeps a constant phase between input and output interfaces of a node for non-continuous messages: it reduces the jitter but does not manage to achieve a minimal latency.

In other words, the solutions in the prior art try to detect congestion issue and to react upon this detection to avoid or limit the effects of congestion. For achieving this, some solutions propose an optimal use of the buffers that are used for forwarding datagrams towards an output interface.

However, at the time of congestion detection, the latency is already impacted. Furthermore, although many research works have been undertaken in this direction, no solution based on optimization of buffer usage has prove to be satisfactory in terms of actual latency reduction.

FIG. 2 shows for a node the contention delay (i.e. the latency for one node) in seconds on a vertical axis, as a function of the load of the node, expressed in percentage.

The curves 1, 2, 3 depict the use of the DiffServ EF mechanism with 3 different mixes between "Expedited Forwarding" (EF) and regular "Best Effort" (BF):
Curve 1: BF = 30% and EF = 70%
Curve 2: BF = 20% and EF = 80%
Curve 3: BF = 10% and EF = 90%

It shows that Expedited Forwarding does not solve the contention issue.

However, the curve 4, representing the latency curve for a node according to the invention, shows no queuing latency, regardless of the load of this node.

For achieving this, the invention is based on the idea of avoiding the use of buffering of the datagrams inside the network node for collision avoidance. In other words, it avoids the queuing of datagrams. Accordingly, the invention is based on a break-through, compared with the prior art solutions trying to optimize the buffer usage.

The node according to the invention can avoid buffering of the incoming datagrams thanks to a new device and a new method for forwarding them, avoiding also any collisions at output interfaces.

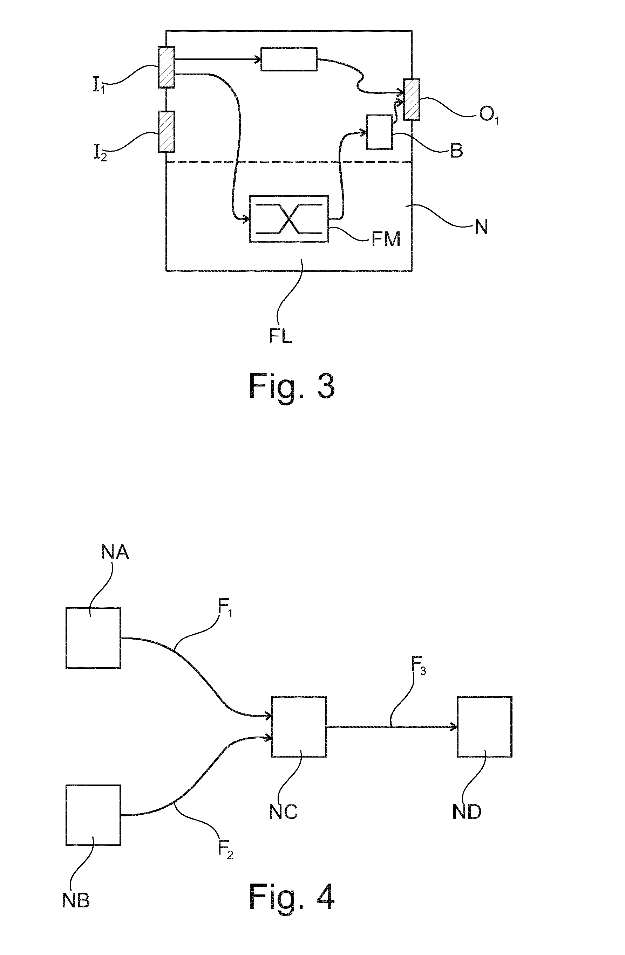

FIG. 3 shows a very simplified and schematic view of a network node N according to an embodiment of the invention.

This node comprises 2 input interfaces I1, I2, and one output interface O1. The node comprises a forwarding layer FL, which is the only layer depicted on FIG. 3. The node may also comprise various means belonging to other layers or functionalities, like routing modules (BGP...), application layers, etc.

The forwarding layer FL comprises forwarding means FM for forwarding datagrams received at an input interface to the appropriate output interface according to routing/switching algorithms. Typically, the output interface O1 is associated with a buffer B queuing the data massage to be transmitted.

The forwarding layer FL further comprises means M adapted to implement other characteristics of the invention. These means may be software means, hardware means or any mixes between them.

In addition, the node according to the invention is adapted to detect that datagram belongs to a coherent flow

A "coherent flow" is a set of datagrams obeying to a temporal law. The time of arrival of each datagram of such a flow is known in advance in a deterministic way. This time of arrival is known as a "reception date". It can be an absolute value or, preferentially, a relative value according to a previous message of the flow. This time is as precise as it could be according to the clock used to measure it and to the accuracy of the underlying technology.

The node N comprises means for detecting such coherent flows at reception of the datagrams. Several methods could be used on this purpose:

According to a first embodiment of the invention, the incoming datagram contains a "tag" indicating that they belong to a coherent flow. Such a tag can be set by the source application A. For instance a video streaming coming from a web-camera can be determined by the application itself as forming a coherent flow, as the web-camera will transmit images at a predetermined rate.

According to another embodiment of the invention, information regarding a coherent flow, including its temporal law, can be provisioned to the network nodes. They can be provisioned by network management systems, for instance in the situation of long-term coherent flow should be established. As examples of such a case, one can cite VPN, leased tunnels, etc.

According to still another embodiment of the invention, the node can be adapted to correlate received datagrams so as to determine some temporal patterns representative of the coherent flow. For instance, datagrams with a same set of information (e.g. source and destination IP or MAC addresses...) and received according to a certain periodicity can be decided forming a coherent data flow.

Some coherent flows may however have different sources like in the case illustrated by FIG. 4.

In this illustrative example, a node NA and a node NB are emitting coherent flows, respectively F1 and F2, to a node NC which forward them through a same output interface to node ND. The flow F3 from node NC to node ND comprises the information corresponding to the flows F1 and F2 (it may also comprise other information coming from other nodes, not depicted, of the network).

Accordingly, the deterministic nature, or "coherence" of the flows F1, F2 is kept in the resulting aggregated flow F3 which is, thus, coherent. Accordingly, the node ND can detect a coherent flow F3 (although the sources of the datagrams are different).

An interesting result of this behavior is that, from node ND's perspective, only one coherent flow is to be handled. This allows then scalability by allowing the management of aggregated coherent flows, rather than a fine-grained management of individual coherent flows.

The temporal law associated with the coherent flow could be a periodicity (i.e. a streaming of one datagram every x milliseconds), but other temporal law can be designed.

The temporal law can be stored in a memory associating coherent flows with the corresponding temporal laws.

Some mechanisms can be designed for deleting outdated entries of this memory, for instance statistical mechanisms.

If the node detects than a received datagram belongs to a coherent flow, then it can forward it to an appropriate output interface O1 for immediate emission during a reserved time interval. It means that this packet is not queued in any contention handling buffer, since the output interface is already reserved for it. The way a time interval is reserved is explained below.

The time interval depends at least on the size of the datagram to be transmitted. It may also depend on the bitrate on the line connected to the output interface. Accordingly, the time interval differs by nature with the time slot according to regular forwarding mechanisms. As time slots are not aligned with the actual size of the datagrams to be transmitted, it implies some latency. As the time interval is on the contrary adapted to the volume of data to be transmitted, the resource is optimally used and no slot-related latency is implied.

In other words, the received data packet is emitted at output interface O1 at a date known before the arrival of the packet on the input interface I1.

Processing the datagram and transmitting physically it from one interface to another interface takes the same time regardless of whether the node is loaded or not. This delay can be measured during a setup phase of the system and taken into account in the further treatments performed by the network nodes.

When the datagram is forwarded to the output interface O1 for immediate transmission, two situations can occur:
- Either the output interface is available; and then the datagram is actually and immediately emitted.
- Or the output interface is not available, because other datagrams are under transmission.

In this latter case, a reservation conflict is detected, i.e. the date for the emission of this datagram is not appropriate according to the conditions of the output interface O1.

As the delay between the reception date and the emission date of this datagram is known for certain (as it only depends on internal and constant electronic latency), it then means that the reception date is not appropriate as it corresponds to an unavailable time interval for the output interface.

According to the invention, a signaling message is sent back to the node which has emitted this datagram. Reverting back to FIG. 1, if a reservation conflict is detected at node N3, a signaling message will be sent back to the node N2, which the previous one in the path linking the source application A to the recipient N4.

Another type of reservation conflict may happen even if the output interface O1 is available.

It is the case when the node is knowledgeable of the temporal law associated with the coherent flow in which the received datagram belongs and when the reception date differs substantially from the conditions set by this temporal law.

A temporal law can be associated to a coherent flow in various ways:
- it can be provisioned by an entity exterior to the node. It can be provisioned by out-of-band signaling from entities like a network management system; or by in-band signaling.
- it can be determined by the node itself by analyzing the incoming datagrams and by performing correlations with them, so as to determine patterns. This process can be performed at the same time at the detection of the coherent flows, so that both the detection and the temporal law are determined altogether.
- etc.

As it has been said previously, the temporal law can be periodic (one message every x milliseconds) but many other patterns can be designed or detected.

In particular, in the case of aggregated coherent flows, the temporal law can be the aggregation of several signals with different characteristics (e.g. different periodicity) resulting in more complex temporal patterns.

It can be noted here that in the case of a new coherent flow, a node can need several datagrams before determining the temporal law, in the situation it is not known by signaling means.

From the temporal law, the node can determine when the next datagram of the associated coherent flow is expected to be received.

It can reserve a time interval in advance on the output interface according to this temporal law. Accordingly, time intervals can be reserved not only for a received datagram, but also for the expected subsequent datagram belonging to the same coherent flow (and obeying to the same temporal law). In other words, the output interface is reserved for a datagram even before this datagram is received.

This is the reason why the node according to the invention does not need buffering datagrams to solve contention anymore and why the latency due to contention is cancelled.

It should be noted that no explicit reservation is performed from outside (like e.g. with RSVP protocols and the like).

The datagram is forwarded to the output interface in order to be emitted during the time interval reserved according to this temporal law.

To be precise, due to the invention, a small deviation is implied in the definition of a "datagram": according to the RFC 1594 of the IETF (Internet Engineering Task Force), a datagram is "A self-contained, independent entity of data carrying sufficient information to be routed from the source to the destination computer without reliance on earlier exchanges between this source and destination computer and the transporting network.".

Due to the invention, there exists a reliance on earlier exchanges. In fact, the invention can be considered as a method and a device for enabling time-base forwarding (in contrast with address-based forwarding).

Accordingly, the node can easily determine whether an incoming datagram from a given coherent flow complies with the temporal law associated with this coherent flow. It can then determine any deviation of a coherent flow with its associated temporal law.

Such a deviation may be caused by a shift between clocks. Indeed, each nodes of a communication network comprise its own clock. In general, clocks of two given nodes of a network shift relatively to each other. Shift between two clocks may be characterized by phase but also frequency.

According to an embodiment of the invention, some deviation can be considered as minor, and should not imply any corrective actions.

The node can be adapted to determine the compliance of the reception date of a datagram to the temporal law with some flexibility. For instance, a difference can be determined between the reception date and an "expected reception date", directly derived from the temporal law. If this difference is below a threshold, no corrective action is triggered. The datagram is handled as if it was received precisely according to the temporal law.

In the contrary, a corrective action should be triggered. Important shifts may indeed cause several issues, including the datagram being considered as not belonging to the same coherent flow anymore. Furthermore, the shift may imply the reception of the datagram at a date when the output interface is not available, and may impact the overall behavior of the invention.

This corrective action comprises sending a signaling message back to the node which has emitted this datagram. As previously explained in relation with the reservation conflict implied by having an output interface unavailable at the required time, this signaling message is sent back to the immediate previous node in the path of the coherent flow.

In both cases, the signaling message aims at modifying the reception date of the subsequent datagrams beholding to the same coherent flow. Accordingly, it contains time information adapted for enabling the previous network node to modify its emission date, which directly corresponds to a modification of the reception date. This enables a compensation of the reservation conflict.

In case of a deviation from the temporal law, the time difference between the actual reception date and the expected reception date can serve as basis to determine the time information: it may be sufficient to set the time information at a value such as to compensate the time different, so that the next datagram of the coherent flow will be precisely aligned on the temporal law.

In practical, the temporal law can indicate the time difference (or its opposite), i.e. a relative value.

According to an embodiment of the invention, in case of unavailability of the output interface O1 at the reserved time interval, a new time interval can be determined, during which the output interface will be available for the datagram.

The node can determine from the temporal laws stored in its memory, the overall availability of the output interface O1. It can then deduce from this knowledge at which dates the output will be available for emitting the datagram. The date can be selected as the starting point of a time interval fitting this datagram, according to its size (and e.g. local parameters like the bitrate at the output interface, etc.),

This date can be communicated to the previous node by the signaling message. Here again, the time information can be relative to the date of arrival of the packets of the coherent flow.

According to another embodiment of the invention, a different temporal law can be designed by the node: the modification does not only impact a shift to a new date, but also the whole temporal patterns of the coherent flow can be modified: periodicity, etc.

Accordingly, the following datagrams of the coherent flow will be sent according to the modified temporal law (or simply with the same temporal pattern but shifted in time). They will be sent to be received on the output interface O1 at a date where the output is available and will be actually forwarded without any latency due to contention.

In some cases, the output interface may not have any availability anymore.

Or, it may not have any availability dedicated to coherent flows. Indeed, according to an embodiment of the invention, it is possible to reserve a certain amount of resources dedicated to coherent flows; the rest being available for traffic with for example other Integrated or Differentiated Service class.

In such situation, the datagram (and the associated coherent flow) can be downgraded to a best-effort behavior. This downgrading does not presume for the treatment performed by next nodes downstream on the path. For instance, some traffic shaping mechanisms can be implemented, so that "downgraded" datagrams can be detected as beholding to a coherent flow at such a downstream node.

In addition to the transmission of the signaling message, other actions are to be undertaken by the node, notably regarding the received datagram.

Especially in the case the datagram is received at a date when the output interface is unavailable, the datagram can be dropped. Such a solution is acceptable for some applications, like video streaming, etc., and, for the overall behavior of the network, it is considered more efficient to allow a certain amount of message drops than to buffer them within the node, implying latency.

Another solution can be to transmit it. It can then be buffered according to legacy mechanism. If the datagram is tagged as belonging to a coherent flow, the tag can be removed. Another tag may be added for indicating it should be handled according to some Integrated or Differentiated Service class for instance.

When a reservation conflict occurs in a given node, a signaling message is sent to the previous node for modifying the reception date of the subsequent datagrams of the coherent flow. Such a modification can have some impacts on the conditions of this previous node: notably, if this node is according to the invention, this datagram is not buffered for contention purpose and, for it also, any change in its emission time implies a change in its reception date. Accordingly, the previous node also should send back a signaling message to its own previous node.

In the example of FIG. 1, a signaling message sₐ is sent from node N4 to node N3, triggering a signaling message s_{b} sent from node N3 to node N2, where it in turns trigger the signaling message s_{c} sent from node N2 to node N1.

At node N1, which is the source of the coherent flow and implement the source application A, the signaling message s_{c} may trigger sending a signaling message through the protocol stack PS up to the application A, which is deployed at the application layer L7.

The application can then adapt its transmission configuration according to the time information contained in the signaling message. The way it adapts them depends on the nature of the application.

An example for such an application A is a video-conferencing application running in collaboration with a web-camera. The adaptation can then consist in tuning the video configuration of the web camera, according to the time information.

Similarly with the modification of the emission date or temporal law at lower layers of the node as described previously, the video configuration can be tuned so as to modify the scheduling of the image sampling of the video camera: this modification can be a simple shift in time, so as to compensate a time difference at the next node, or a more complex modification of the temporal law (sampling rate, video coding, etc.).

According to the invention and its embodiments, any reservation conflict at a given node of the transmission path is compensated upstream from neighbor to neighbor along the transmission path.

A compensation at a given node may imply a subsequent reservation conflict at an upstream node: for example, modifying the emission date can result in one or two nodes upstream to an emission at a date the output is unavailable. But this new reservation conflict can be also handled according to the invention, so that it can be corrected. In other words, an iterative process starts resulting in the one-by-one compensations of the reservation conflicts.

At the end, any reservation conflict can be corrected, and the coherent flows can be transmitted from end to end without contention in the traversed network nodes.

This is because at each node of the path, the output interfaces are reserved according to the temporal laws. The nodes do not need anymore to actually receive a datagram to reserve resources of the output interface. Accordingly the invention prevents to queue the received datagram to solve contention and the latency due to contention is cancelled as shown at FIG. 2.

The invention has been described with reference to preferred embodiments. However, many variations are possible within the scope of the invention.

## Claims

1. Method for forwarding datagrams in a node for a packet-switched network, comprising steps of:
- Receiving a datagram to be transmitted;
- Detecting that said datagram belongs to a coherent flow and forwarding said datagram to the appropriate output interface for emission during a reserved time interval;
- Detecting a reservation conflict concerning the emission of said datagram on said output interface and, when a reservation conflict is detected, sending a signaling message containing time information for modifying the reception dates of subsequent datagrams of said coherent flow.

2. Method according to claim 1, further comprising associating a temporal law to said coherent flow, so that said time interval is reserved in advance according to said temporal law.

3. Method according to claim 2, comprising detecting a reservation conflict by determining that the reception date of said datagram does not comply with said temporal law, and wherein said time information is computed from said temporal law and said reception date.

4. Method according to any of the previous claims, comprising detecting a reservation conflict when the reception date of said datagram corresponds to an unavailable time interval for said output interface, and wherein said time information is based on the time on which said output interface is available.

5. Method according to any of the previous claims, wherein said datagram is received from an emitting node and wherein said signaling message is sent back to said emitting node.

6. Method according to any of the claims 1 to 4, wherein said datagram is received from an application (A) deployed at an application layer of said node, and wherein said signaling message is sent to said application.

7. Method according to the previous claim, wherein said application adapts its transmission configuration according to said time information.

8. Method according to the previous claim, wherein said application tunes a video configuration of a web-camera according to said time information.

9. Computer program product comprising computer-executable instructions for performing the method according to any of the previous claims, when run onto a data processing unit.

10. Node of packet-switched network having input interfaces (I1, I2) and at least one output interfaces (O1), and a forwarding layer (FL) adapted to detect that a received datagram belongs to a coherent flow and to forward it to the appropriate output interface for emission during a reserved time interval, and further adapted to detect a reservation conflict concerning the emission of said datagram on said output interface and, when a reservation conflict is detected, to send a signaling message containing time information for modifying reception dates of subsequent datagrams of said coherent flow.

11. Node according to the previous claim wherein said datagram is received from an emitting node and wherein said signaling message is sent back to said emitting node.

12. Node according to claim 10, wherein a temporal law is associated to said coherent flow so that said time interval is reserved in advance according to said temporal law.

13. Node according to claim 12, adapted to detect a reservation conflict by determining that the reception date of said datagram does not comply with said temporal law, and wherein said time information is computed from said temporal law and said reception date.

14. Node according to any of the claims 10 to 13, adapted to detect a reservation conflict when the reception date of said datagram corresponds to an unavailable time interval for said output interface, and wherein said time information is based on the time on which said output interface is available.

15. Node according to any of the claim 10 to 14, further comprising an application layer comprising at least an application (A) and wherein said datagram is received from said application (A) and wherein said forwarding layer is adapted to send said signaling message to said application (A).
